# DEMANDE DE BREVET EUROPEEN

(11) **EP 1 655 083 A1**
(43) Date de publication de la demande: **10.05.2006**
(21) Numéro de dépôt: 05300890.0
(22) Date de dépôt: 04.11.2005
(51) Int. Cl.: B09B 3/00, B29B 17/00, C08J 11/00, B30B 11/08

(54) **Procédé de compactage des fines de poudres pour leur recyclage dans la fabrication de poudres thermodurcissables**

(30) Priorité: 04.11.2004 FR 0452519
(71) Demandeur: ARDEC SERVICE - AGENCEMENT RENOVATION DECORATION ETUDE CONCEPTION, 07100 BOULIEU LES ANNONAY (FR)
(72) Inventeur: REY, Marcel, 07100, BOULIEU LES ANNONAY (FR); REY, Pascal, 07100, SAINT MARCEL LES ANNONAY (FR); REY, Michel, 07430, SAVAS (FR); REY, Christophe, 07430, ST CYR (FR); MANIQUET, François, 42000, SAINT-ETIENNE (FR)
(74) Mandataire: Thivillier, Patrick

(57) **Abrégé**

Selon le procédé on soumet lesdites fines à une opération de compression uniaxiale rotative à grande vitesse pour obtenir, en continu, une pluralité de pastilles (1) de densité de poids et de dimensions déterminées pour les réinjecter dans une partie d'une installation de fabrication de poudres comprenant notamment un poste (B) de mélange des charges et pigments, un poste d'extrusion (C), un poste de broyage (D).

## Description

L'invention concerne le domaine technique du traitement des déchets de poudres thermodurcissables.

Il est parfaitement connu pour l'homme du métier d'utiliser des poudres thermodurcissables dans différents domaines d'applications, tels que, par exemple, la peinture. Il n résulte, dans la chaîne d'élaboration des poudres et dans la chaîne d'utilisation de ces dernières, des déchets.

Par exemple, ces déchets de poudres peuvent provenir d'appareils de filtration, la poudre étant composée de différentes matières parmi lesquelles on peut citer :
- les poudres époxy, chargées essentiellement de résine époxy,
- les poudres mixtes, chargées de résine époxy et de résine polyester,
- les poudres polyester, chargée essentiellement de résine polyester,
- les poudres primaires riches en zinc,
- les poudres de polyuréthane, ...

Ces déchets peuvent également provenir d'un stock de poudres non utilisées et dont la date de péremption est dépassée.

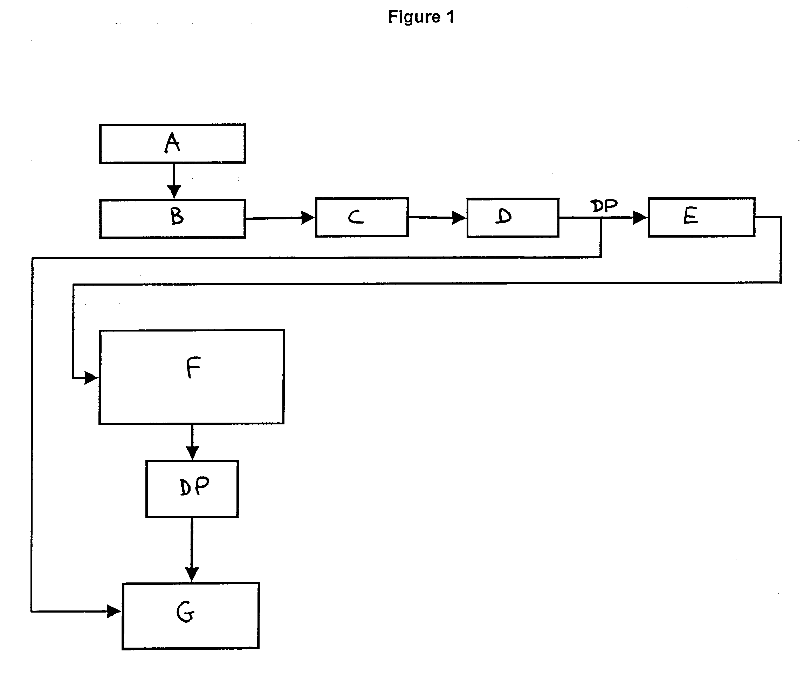

Généralement, ces déchets, quelle que soit leur origine, sont détruits par incinération, et font l'objet d'un suivi en vue d'une bonne traçabilité. On renvoie à l'exemple de la figure 1 qui montre le traitement des déchets des poudres selon l'état antérieur de la technique au niveau de la fabrication desdites poudres, d'une part, et de leur utilisation, d'autre part.

Par exemple, au niveau de la fabrication qui comprend essentiellement, après avoir déterminé la formulation en (A), un poste (B) de mélange des charges et pigments, un poste d'extrusion (C), un poste de broyage (D) et un poste d'emballage et d'expédition (E), à destination d'un utilisateur (F) qui peut, par exemple, appliquer cette poudre sur différents objets. Les déchets de poudres (DP) qui peuvent apparaître à la sortie du poste de broyage et au niveau de l'utilisateur, sont récupérés par une entreprise spécialisée en vue d'être, par exemple, incinérés (étape G).

Il en résulte un coût important pour détruire ces déchets.

On observe également que les déchets sont volatiles de sorte qu'il est difficilement envisageable de les réutiliser tels quels dans un processus de fabrication des poudres, en considérant par exemple les difficultés de transport, et de réinjections dans ledit processus de fabrication.

Des solutions ont été proposées pour assurer le compactage des fines de poudres, comme il ressort de l'enseignement des brevets EP 1 027 389 et EP 1 025 170, en vue de les réutiliser dans un process de fabrication de poudres.

Toutefois, ces solutions ne sont pas satisfaisantes. Selon l'enseignement des brevets précités, le compactage des poudres s'effectue soit par :
- Compression axiale. Avec ce procédé, on obtient une forme de pastille et une densité de compression correcte mais une faible capacité de production.
- Compression par laminage entre rouleaux. Avec ce procédé, on obtient une faible densité de compression, une forme des pastilles non contrôlée et une faible capacité de production.
- Compression par laminage entre rouleaux avec formage. Avec ce procédé, on obtient une faible densité de compression, une forme des pastilles contrôlée et une faible capacité de production.

Autrement dit, ces différentes solutions ne permettent pas d'assurer un compactage des fines de poudres selon des cadences élevées, de sorte qu'elles ne peuvent pas être utilisées d'une manière efficace si l'on considère l'importance de la quantité de fines de poudres résultant d'un process de fabrication classique des poudres.

On observe également qu'une quantité importante de fines de poudres compactées, après réinjection dans le process de fabrication, se retrouve en tant que déchets.

L'invention s'est fixée pour but de remédier à ces inconvénients d'une manière simple, sûre, efficace et rationnelle.

Le problème que se propose de résoudre l'invention est de pouvoir réutiliser les déchets de poudres en vue de les réinjecter dans le processus de fabrication de poudres thermodurcissables après avoir compacté les fines de poudres selon des cadences de production élevées pour obtenir des produits compactés présentant des propriétés mécaniques et physique compatibles avec lesdites poudres.

Pour résoudre un tel problème, on soumet lesdites fines à une opération de compression uniaxiale rotative à grande vitesse pour obtenir, en continu, une pluralité de pastilles de densité, de poids et de dimensions déterminées pour les réinjecter dans une partie d'une installation de fabrication de poudres comprenant notamment un poste de mélange des charges et pigments, un poste d'extrusion, un poste de broyage.

Pour résoudre le problème posé d'obtenir un mélange homogène, on réinjecte les pastilles en amont du poste d'extrusion.

Pour résoudre le problème posé de parfaitement mélanger les pastilles au moment de l'extrusion, on réalise le compactage des fines de poudres en soumettant ces dernières à un effort de compression compris entre 50 et 80 daN/mm2 pour obtenir des pastilles de :
a) diamètre compris entre 12 et 30 mm
b) épaisseur comprise entre 1,5 et 5 mm
c) densité comprise entre 0,8 et 1,5.

Suivant une autre caractéristique, les pastilles présentent une amorce de rupture pour faciliter leur mélange.

Pour la mise en oeuvre du procédé, compte tenu du problème posé de pouvoir fabriquer des pastilles selon des cadences de production élevées, le dispositif comprend au moins une machine multipostes, chaque poste étant conformé pour assurer une compression uniaxiale rotative des fines de poudres au moyen d'un ensemble poinçon matrice.

L'invention est exposée ci-après plus en détail à l'aide des figures des dessins annexés dans lesquels :
- la figure 1 est un synoptique montrant le traitement des déchets de poudres selon l'état antérieur de la technique ;
- la figure 2 est une vue semblable à la figure 1 montrant le traitement des déchets de poudres selon les caractéristiques de l'invention ;
- les figures 3, 4, 5, 6, 7 et 8 montrent par des vues à caractère purement schématique un exemple indicatif, nullement limitatif, du principe de compression pour le compactage des fines de poudres ;
- la figure 9 est une vue en plan à caractère schématique d'une partie de machine mettant en oeuvre le principe de compression illustré aux figures 3 à 8 ;
- la figure 10 est une vue en coupe longitudinale correspondant à la figure 9.

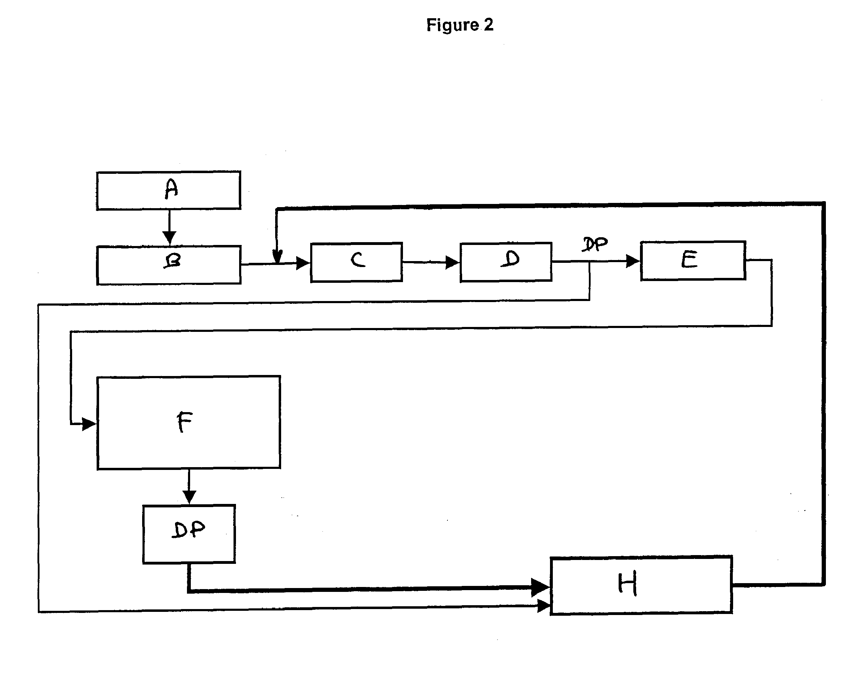

On renvoie au synoptique de la figure 2 qui montre, à titre d'exemple indicatif nullement limitatif, les principales étapes de fabrication des poudres en vue de leur expédition au niveau d'un utilisateur.

Pour une meilleure compréhension de la suite de la description, et une meilleure comparaison du procédé de revalorisation des déchets selon l'invention par rapport à l'état de la technique tel qu'exposé dans la partie introductive de la description, les mêmes repères sont conservés, à savoir, au niveau de la fabrication, un poste (A) de formulation, un poste (B) de mélange, un poste (C) d'extrusion, un poste (D) de broyage, et un poste (E) d'emballage et d'expédition, au niveau d'un utilisateur potentiel (F). Les fines ou déchets de poudres sont désignés par (DP).

Selon une caractéristique à la base de l'invention, les déchets ou fines de poudres (DP) sont soumis à une opération (H) apte à les compacter pour créer un ensemble compact homogène de mêmes caractéristiques mécaniques et physiques que celles de la poudre.

Pour réaliser le compactage de la poudre, cette dernière est soumise à un effort de pression compris entre 50 et 90 daN/mm2.

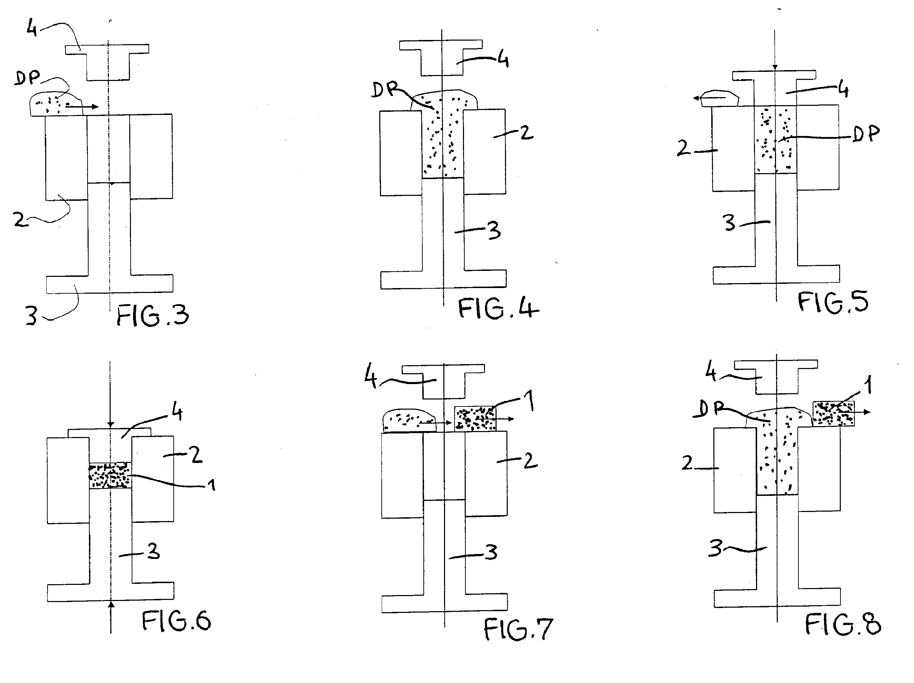

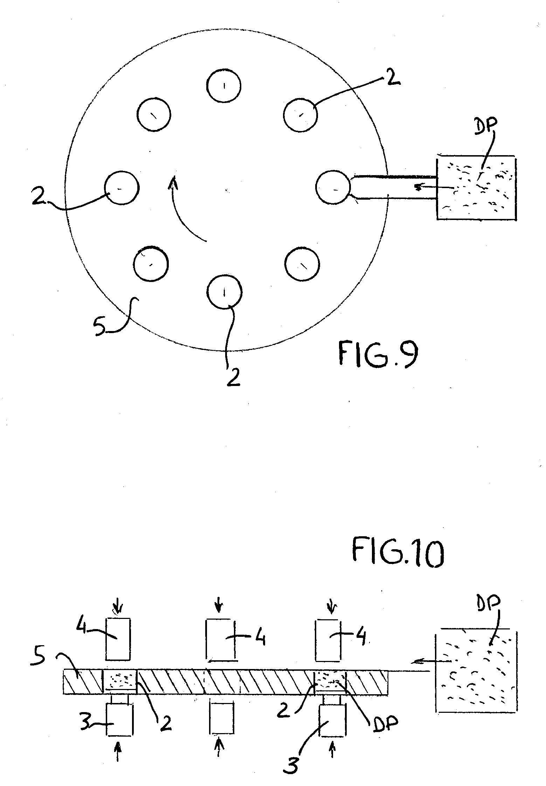

Afin de ne pas altérer les caractéristiques et propriétés de la poudre, l'effort de pression est réalisé à froid. Par exemple, cet effort de pression est obtenu par une opération de frittage. On renvoie aux figures 3, 4, 5, 6, 7 et 8 qui montrent les principales phases pour obtenir le compactage des fines de poudres (DP) pour obtenir un ensemble homogène (1).

Pour l'essentiel, ces moyens de compactage comprennent un moule ou matrice (2) dans lequel sont introduits les déchets de poudres (DP). Le fond du moule (2) coopère avec un noyau d'éjection (3). Les fines de poudres (DP) sont acheminées dans le moule (2) par tout moyen connu pour être compactées, sous un effort de pression exercé par un pilon ou poinçon (4). Avantageusement, le moule (2) est déterminé pour obtenir un ensemble compact (1) sous forme d'une pastille, sans pour cela exclure d'autres formes géométriques.

Compte tenu du problème posé de pouvoir produire des pastilles selon des cadences élevées, le dispositif comprend au moins une machine multipostes, chaque poste étant conformé pour assurer une compression uniaxiale rotative des fines de poudres au moyen d'un ensemble poinçon (4) matrice (2). Selon ce procédé de compactage, il n'y a pas d'élévation importante de température.

Chaque ensemble poinçon (4) matrice (2) est monté en combinaison avec un plateau circulaire (5) entraîné en rotation. Les poinçons (4) sont fixes, tandis que les matrices (2) sont formées à partir du plateau, le fond des matrices est équipé du noyau d'éjection (3). L'une des matrices au moins est alimentée en fines de poudres (DP).

A titre indicatif nullement limitatif, il est possible d'obtenir des cadences de l'ordre de 200 kg/heure.

Compte tenu des caractéristiques à la base de l'invention, les pastilles (1), ou autres, peuvent être facilement transportées puis concassées afin d'être réinjectées au niveau du process de fabrication de la poudre en remplacement des charges. On renvoie au synoptique de la figure 2 qui montre la revalorisation des fines de poudres (DP).

Les pastilles sont réinjectées en amont du poste d'extrusion (C).

La réalisation des pastilles peut être effectuée au niveau du processus de fabrication en tant que tel (sortie du poste de broyage) et, bien évidemment, au niveau de l'utilisateur.

Pour faciliter le mélange de pastilles, on prévoit de former, sur chaque pastille, une ou des amorces de ruptures. Dans ce cas, le poinçon (4) présente un profil déterminé.

Des résultats satisfaisants sont obtenus pour des pastilles présentant les caractéristiques suivantes :
a) diamètre compris entre 12 et 30 mm
b) épaisseur comprise entre 1,5 et 5 mm
c) densité comprise entre 0,8 et 1,5.

Les avantages ressortent bien de la description, en particulier on souligne et on rappelle l'économie importante réalisée et le respect de l'environnement.

En outre, d'une manière importante, après compression à grande vitesse des fines de poudres et après réinjection des pastilles obtenues dans le cycle de fabrication, en amont du poste d'extrusion, on constate une présence de fines de poudres de l'ordre de 10%, c'est-à-dire sensiblement le même pourcentage que dans le cas d'un process classique où il n'y a pas réinjection de pastilles.

## Revendications

1. Procédé de compactage des fines de poudres pour leur recyclage dans la fabrication de poudres thermodurcissables, **caractérisé en ce qu'**on soumet lesdites fines à une opération de compression uniaxiale rotative à grande vitesse pour obtenir, en continu, une pluralité de pastilles (1) de densité de poids et de dimensions déterminées pour les réinjecter dans une partie d'une installation de fabrication de poudres comprenant notamment un poste (B) de mélange des charges et pigments, un poste d'extrusion (C), un poste de broyage (D).

2. Procédé selon la revendication 1, **caractérisé en ce que** l'on réinjecte les pastilles (1) en amont du poste d'extrusion (C).

3. Procédé selon la revendication 1, **caractérisé en ce qu'**on réalise le compactage des fines de poudres en soumettant ces dernières à un effort de compression compris entre 50 et 80 daN/mm2 pour obtenir des pastilles de :
a) diamètre compris entre 12 et 30 mm
b) épaisseur comprise entre 1,5 et 5 mm
c) densité comprise entre 0,8 et 1,5.

4. Procédé selon la revendication 3, **caractérisé en ce que** les pastilles (1) présentent une amorce de rupture pour faciliter leur mélange.

5. Dispositif de mise en oeuvre du procédé selon l'une quelconque des revendications 1 à 4, **caractérisé en ce qu'**il comprend au moins une machine multipostes, chaque poste étant conformé pour assurer une compression uniaxiale rotative des fines de poudres au moyen d'un ensemble poinçon (4) matrice (2).

6. Dispositif selon la revendication 5, **caractérisé en ce que** chaque ensemble poinçon (4) matrice (2) est monté en combinaison avec un plateau circulaire (5) entraîné en rotation, les poinçons sont fixes, tandis que les matrices sont formées à partir du plateau, le fond des matrices est équipé d'un noyau d'éjection (3), l'une des matrices au moins étant alimentée en fines de poudres.
